(19) Europäisches Patentamt
European Patent Office
Office européen des brevets

(11) EP 4 335 903 A1

(12) # EUROPEAN PATENT APPLICATION
published in accordance with Art. 153(4) EPC

(43) Date of publication:
**13.03.2024 Bulletin 2024/11**

(21) Application number: **22798856.5**

(22) Date of filing: **29.03.2022**

(51) International Patent Classification (IPC):
***C08L 67/02*** *(2006.01)*

(52) Cooperative Patent Classification (CPC):
**C08L 67/02;** Y02W 30/62

(86) International application number:
**PCT/JP2022/015371**

(87) International publication number:
**WO 2022/234749 (10.11.2022 Gazette 2022/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.05.2021 JP 2021078749**

(71) Applicant: **TOYOBO CO., LTD.**
**Osaka-shi, Osaka 530-0001 (JP)**

(72) Inventors:
- **SASAI, Tamayo**
  **Otsu-shi, Shiga 520-0292 (JP)**
- **KINAMI, Maki**
  **Otsu-shi, Shiga 520-0292 (JP)**
- **YAMAMOTO, Yu**
  **Otsu-shi, Shiga 520-0292 (JP)**
- **NISHINAKA, Fumiaki**
  **Otsu-shi, Shiga 520-0292 (JP)**
- **MORIYAMA, Nobuo**
  **Otsu-shi, Shiga 520-0292 (JP)**

(74) Representative: **Vossius & Partner**
**Patentanwälte Rechtsanwälte mbB**
**Siebertstrasse 3**
**81675 München (DE)**

(54) **METHOD FOR PRODUCING POLYESTER RESIN COMPOSITION AND METHOD FOR REGENERATING COLLECTED POLYESTER RESIN**

(57) An object of the present invention is to provide a method for producing a polyester resin composition with less coloring and less decrease in molecular weight even after several times of recycling with used polyester resins produced with at least one type of polymerization catalyst selected from the group consisting of an antimony compound, a titanium compound, and a germanium compound. The present invention contains a method for producing the polyester resin composition (C) comprising a step of mixing a polyester resin (A) collected for recycling and a polyester resin (B) containing an aluminum compound and a phosphorous compound, wherein the polyester resin (A) satisfies the following (1) to (3):
(1) the polyester resin (A) comprises at least one element selected from the group consisting of antimony element, titanium element, and germanium element,
(2) the polyester resin (A) comprises at least one of the antimony element, the titanium element, and the germanium element at a total content of from 2 to 500 ppm by mass, and
(3) the polyester resin (A) has an intrinsic viscosity of from 0.5 to 0.8 dl/g.

EP 4 335 903 A1

## Description

TECHNICAL FIELD

The present invention relates to a method for producing a polyester resin composition and a method for regenerating a collected polyester resin.

BACKGROUND ART

The polyester resins represented by polyethylene terephthalate (PET) and polyethylene naphthalate (PEN) have high transparency, and excellent mechanical and chemical characteristics. The polyester resins have been used in various fields according to their characteristics, for example, as fibers for clothing and industrial materials, films or sheets for packaging and industrial purposes, and hollow molded bodies for bottles and engineering plastics.

In recent years, for example, hollow molded bodies produced from polyester resins have become more essential in our daily lives. However, with growing use of hollow molded bodies, various problems such as resource depletion, an increase in marine debris, and global warming have been caused. As a method to solve such problems, so-called recycling system involving collection and regeneration of hollow molded bodies has attracted attentions. In the system, hollow molded bodies including used polyester bottles are collected and re-molded into molded bodies, for example, polyester bottles, fibers, and nonwoven fabrics, for reuse.

When polyester resins produced with an antimony compound, a titanium compound, or a germanium compound as a widely used polymerization catalyst are collected after use and then regenerated, however, coloring and a decrease in molecular weight of recycled polyester resins are caused due to degradation of the collected polyester resin. Therefore, improvements in the coloring and the decrease in molecular weight of the recycled polyester resin are needed.

To solve above problems, methods involving addition of a hindered phenol compound are known specifically in the production of polyester resin with an antimony compound, a titanium compound, or a germanium compound as a polymerization catalyst (see, for example, Patent Documents 1 and 2).

According to the methods described in Patent Documents 1 and 2, thermal oxidation stability of polyester resin compositions is improved by employing such methods, however, the polyester resin compositions should have further improved characteristics to prevent degradation of physical characteristics of the polyester resin compositions when recycled.

Against such backgrounds, the present inventors have come to a finding of a catalyst which enabled production of polyester with high thermal stability, specifically, finding of a catalyst containing an aluminum compound and a phosphorus compound having hindered phenol structure as described in Patent Documents 3 and 4. However, recycling of used polyester resin produced with at least one type of polymerization catalyst selected from an antimony compound, a titanium compound, and a germanium compound has not been examined.

PRIOR ART DOCUMENT

PATENT DOCUMENT

Patent Document 1: International Publication No. WO2013/154042
Patent Document 2: International Publication No. WO2013/154043
Patent Document 3: International Publication No. WO2007/032325
Patent Document 4: Japanese Laid-Open Patent Publication No. 2006-169432

SUMMARY OF THE INVENTION

PROBLEMS TO BE SOLVED BY THE INVENTION

The present invention has been made to solve such problems of the conventional art. The purpose of the present invention is to provide a method for producing a polyester resin composition (hereinafter, referred to as a highly recyclable polyester resin composition) with less coloring and less decrease in molecular weight even after several times of recycling of used polyester resin produced with at least one type of polymerization catalyst selected from the group consisting of an antimony compound, a titanium compound, and a germanium compound and a method for regenerating a collected polyester resin.

SOLUTION TO THE PROBLEMS

As a result of study to solve the above problem, we have found that a polyester resin containing an aluminum compound and a phosphorus compound is added to a collected polyester resin containing at least one element selected from antimony element, titanium element, and germanium element, to obtain a polyester resin composition with excellent recyclability.

That is, the present invention contains the following constitutions:

1. A method for producing a polyester resin composition (C), the method comprising a step of

    mixing a polyester resin (A) collected for recycling and a polyester resin (B) comprising an aluminum compound and a phosphorus compound,
    wherein the polyester resin (A) satisfies the following (1) to (3):

        (1) the polyester resin (A) comprises at least one element selected from antimony element, titanium element, and germanium element,
        (2) the polyester resin (A) comprises at least one element of the antimony element, the titanium element, and the germanium element at a total content of 2 to 500 ppm by mass, and
        (3) the polyester resin (A) has an intrinsic viscosity of 0.5 to 0.8 dl/g.

2. The method according to the above 1., wherein the polyester resin (B) satisfies the following (4) and (5):

    (4) the polyester resin (B) comprises aluminum element at a content of 5 to 50 ppm by mass, and
    (5) the polyester resin (B) comprises phosphorus element at a content of 5 to 1000 ppm by mass.

3. The method according to the above 1. or 2., wherein the polyester resin composition (C) has an intrinsic viscosity retention rate of 89 % or more.
4. The method according to any one of the above 1. to 3., wherein the polyester resin (A) has an intrinsic viscosity retention rate of 92 % or less.
5. The method according to any one of the above 1. to 4., wherein the polyester resin (B) has an intrinsic viscosity retention rate of 93 % or more.
6. The method according to any one of the above 1. to 5., wherein an amount of the polyester resin (A) with respect to 100 parts by mass of a total amount of the polyester resin (A) and the polyester resin (B) is from 5 to 95 parts by mass.
7. The method according to any one of the above 1. to 6., wherein the phosphorus compound has the phosphorus element and phenolic structure in the same molecule.
8. A method for producing a hollow molded body (D), the method comprising a step of
melt-molding the polyester resin composition (C) prepared with the method according to any one of the above 1. to 7..
9. A method for regenerating a polyester resin (A) collected for recycling comprising a step of
mixing the polyester resin (A) and a polyester resin (B) comprising an aluminum compound and a phosphorus compound, wherein the polyester resin (A) satisfies the following (1) to (3):

    (1) the polyester resin (A) comprises at least one element selected from antimony element, titanium element, and germanium element,
    (2) the polyester resin (A) comprises at least one element of the antimony element, the titanium element, and the germanium element at a total content of 2 to 500 ppm by mass, and
    (3) the polyester resin (A) has an intrinsic viscosity of 0.5 to 0.8 dl/g.

10. The method according to the above 9., wherein the polyester resin (B) satisfies the following (4) and (5):

    (4) the polyester resin (B) comprises aluminum element at a content of 5 to 50 ppm by mass, and
    (5) the polyester resin (B) comprises phosphorus element at a content of 5 to 1000 ppm by mass.

11. The method according to the above 9. or 10., wherein an amount of the polyester resin (A) with respect to 100 parts by mass of a total amount of the polyester resin (A) and the polyester resin (B) is from 5 to 95 parts by mass.
12. The method according to any one of the above 9. to 11., wherein the phosphorus compound has the phosphorus element and phenolic structure in the same molecule.
13. A polyester resin composition (C) comprising a polyester resin (A) collected for recycling and a polyester resin (B) comprising an aluminum compound and a phosphorus compound, wherein the polyester resin (A) satisfies the

following (1) to (3):

(1) the polyester resin (A) comprises at least one element selected from antimony element, titanium element, and germanium element,
(2) the polyester resin (A) comprises at least one element of the antimony element, the titanium element, and the germanium element at a total content of 2 to 500 ppm by mass, and
(3) the polyester resin (A) has an intrinsic viscosity of 0.5 to 0.8 dl/g.

14. The polyester resin composition (C) according to the above 13., wherein the phosphorus compound has the phosphorus element and phenolic structure in the same molecule.
15. The polyester resin composition (C) according to the above 13. or 14., wherein the polyester resin composition (C) has an intrinsic viscosity retention rate of 89 % or more.
16. A hollow molded body (D) formed from the polyester resin composition (C) according to any one of the above 13. to 15..

EFFECTS OF THE INVENTION

According to the present invention, when the polyester resin composition (C) is prepared by mixing the polyester resin (B) comprising an aluminum compound and a phosphorus compound with a collected polyester resin (A) comprising at least one element selected from antimony element, titanium element, and germanium element, coloration and a decrease in molecular weight of the polyester resin composition (C) can be prevented, and a polyester resin composition with excellent recyclability can be obtained. In other words, the used collected polyester resin (A) containing at least one element selected from antimony element, titanium element, and germanium element can be regenerated into a polyester resin composition (C) with excellent recyclability.

MODE FOR CARRYING OUT THE INVENTION

In the present invention, a polyester resin composition (hereinafter referred to as polyester resin composition (C)) is produced by mixing a polyester resin (A) collected for recycling with a polyester resin (B) containing an aluminum compound and a phosphorus compound. The polyester resin (A) can be regenerated by mixing the polyester resin (A) collected for recycling with the polyester resin (B) containing the aluminum compound and the phosphorus compound. The mixture of the polyester resin collected for recycling and the non-collected polyester resin is referred to herein as the polyester resin composition.

[Polyester resin (A)]

The polyester resin (A) comprises an ethylene terephthalate constituent unit preferably in an amount of 50 mol% or more, more preferably 70 mol% or more, further preferably 80 mol% or more, and particularly preferably 90 mol% or more. As a polycarboxylic acid component other than terephthalic acid and a polyhydric alcohol component other than ethylene glycol, the polyester resin (A) may comprise components that the polyester resin (B) may comprise as described later.
The polyester resin (A) contains at least one element selected from antimony element, titanium element, and germanium element, i.e., polyester resin (A) is produced with at least one polymerization catalyst selected from an antimony compound, a titanium compound, and a germanium compound in a catalytic amount.
The polyester resin (A) comprises at least one of the antimony element, the titanium element, and the germanium element at a total content of from 2 to 500 ppm by mass, preferably 5 to 400 ppm by mass, more preferably 10 to 300 ppm by mass, and further preferably 50 to 250 ppm by mass. The total content of more than 500 ppm by mass may cause insufficient intrinsic viscosity retention rate of the polyester resin composition (C). Throughout the specification, the term 'ppm by mass' indicates $10^{-4}$% by mass.
The polyester resin (A) is a polyester resin collected after use for recycling. The shape of the polyester resin (A) is not particularly limited, and preferably has the shape which enables easy mixing of the polyester resin (A) with the polyester resin (B). The polyester resin (A) may be in the shape of, for example, chips, flakes, or powder.
The polyester resin (A) has an intrinsic viscosity of from 0.5 to 0.8 dl/g, and preferably from 0.7 to 0.8 dl/g. When the polyester resin (A) has an intrinsic viscosity of less than above range, the polyester resin composition (C) produced by using the polyester resin (A) may have insufficient mechanical strength and impact resistance. In contrast, when the polyester resin (A) has an intrinsic viscosity exceeding above range, molding process of the polyester resin composition (C) may be difficult.
The polyester resin (A) has an intrinsic viscosity retention rate of preferably 92% or less, more preferably 91%

or less, further preferably 90% or less, and particularly preferably 89% or less. If the intrinsic viscosity retention rate of the polyester resin (A) exceeds 92%, the effect of improving recyclability by blending the polyester resin (B) may be insufficient. The method of measuring the intrinsic viscosity retention rate is described below.

The polyester resin (A) preferably consists of a polyester resin produced with at least one type of a polymerization catalyst selected from the group consisting of an antimony compound, a titanium compound, and a germanium compound. The polyester resin (A) may comprise the polyester resin produced with a polymerization catalyst containing an aluminum compound and a phosphorus compound, however, the amounts of the compounds should preferably be small. The amount of the polyester resin produced with the at least one type of polymerization catalyst selected from the group consisting of the antimony compound, the titanium compound, and the germanium compound in the polyester resin (A) is preferably more than 50% by mass, more preferably 70% by mass or more, and further preferably 80% by mass or more.

[Polyester Resin (B)]

The polyester resin (B) contains an aluminum compound and a phosphorus compound, i.e., polyester resin (B) is produced using a polymerization catalyst consisting of an aluminum compound and a phosphorus compound in a catalytic amount. The polyester resin (B) is a polyester resin capable of regenerating the polyester resin (A) by mixing with the polyester resin (A) collected for recycling.

The polyester resin (B) contains a polyester resin formed from at least one substance selected from polyvalent carboxylic acids and ester-forming derivatives thereof and at least one substance selected from polyhydric alcohols and ester-forming derivatives thereof.

<Polyvalent carboxylic acid components

The main polyvalent carboxylic acid constituting the polyester resin (B) is preferably a dicarboxylic acid. The "dicarboxylic acid as the main polyvalent carboxylic acid" means that the dicarboxylic acid is contained in a total polyvalent carboxylic acid in an amount of more than 50 mol %, preferably 70 mol % or more, more preferably 80 mol % or more, and further preferably 90 mol % or more. In the case where two or more dicarboxylic acids are used, the total amount of these dicarboxylic acids is preferably in the above range.

Examples of dicarboxylic acids include saturated aliphatic dicarboxylic acids such as oxalic acid, malonic acid, succinic acid, glutaric acid, adipic acid, pimelic acid, suberic acid, azelaic acid, sebacic acid, decane dicarboxylic acid, dodecane dicarboxylic acid, tetradecane dicarboxylic acid, hexadecane dicarboxylic acid, 1,3-cyclobutane dicarboxylic acid, 1,3-cyclopentane dicarboxylic acid, 1,2-cyclohexane dicarboxylic acid, 1,3-cyclohexane dicarboxylic acid, 1,4-cyclohexane dicarboxylic acid, 2,5-norbornane dicarboxylic acid, and dimer acid, or ester-forming derivatives thereof; unsaturated aliphatic dicarboxylic acids such as fumaric acid, maleic acid, and itaconic acid, or ester-forming derivatives thereof; and aromatic dicarboxylic acids such as orthophthalic acid, isophthalic acid, terephthalic acid, 5-(alkali metal)sulfoisophthalic acids, diphenic acid, 1,3-naphthalene dicarboxylic acid, 1,4-naphthalene dicarboxylic acid, 1,5-naphthalene dicarboxylic acid, 2,6-naphthalene dicarboxylic acid, 2,7-naphthalene dicarboxylic acid, 4,4'-biphenyldicarboxylic acid, 4,4'-biphenyl sulfone dicarboxylic acid, 4,4'-biphenyl ether dicarboxylic acid, 1,2-bis(phenoxy)ethane-p,p'-dicarboxylic acid, pamoic acid, and anthracene dicarboxylic acid, or ester-forming derivatives thereof.

More preferably, the main polyvalent carboxylic acid component is terephthalic acid or an ester-forming derivative thereof, or a naphthalene dicarboxylic acid or an ester-forming derivative thereof. Examples of the naphthalene dicarboxylic acid and the ester-forming derivative thereof include 1,3-naphthalene dicarboxylic acid, 1,4-naphthalene dicarboxylic acid, 1,5-naphthalene dicarboxylic acid, 2,6-naphthalene dicarboxylic acid, 2,7-naphthalene dicarboxylic acid, and ester-forming derivatives thereof.

The phrase "main polyvalent carboxylic acid component is terephthalic acid or an ester-forming derivative thereof, or a naphthalene dicarboxylic acid or an ester-forming derivative thereof' means that all of the terephthalic acid or the ester-forming derivative thereof and the naphthalene dicarboxylic acid or the ester-forming derivative thereof are contained in an amount of 50 mol% or more, preferably 70 mol% or more, more preferably 80 mol% or more, and further preferably 90 mol% or more in the entire polyvalent carboxylic acid component.

Terephthalic acid, 2,6-naphthalene dicarboxylic acid, or ester-forming derivatives thereof are particularly preferable. If necessary, other dicarboxylic acids may be used as components.

As a polyvalent carboxylic acid other than these dicarboxylic acids, a trivalent or higher polyvalent carboxylic acid or hydroxycarboxylic acid may also be used in a small amount, and a trivalent to tetravalent polyvalent carboxylic acid is preferable. Examples of polyvalent carboxylic acids include ethane tricarboxylic acid, propane tricarboxylic acid, butane tetracarboxylic acid, pyromellitic acid, trimellitic acid, trimesic acid, 3,4,3',4'-biphenyltetracarboxylic acid, and ester-forming derivatives thereof. The amount of the trivalent or higher polyvalent carboxylic acid with respect to the entire polyvalent carboxylic acid component is preferably 20 mol% or less, more preferably 10 mol% or less, and further preferably 5 mol% or less. In the case where two or more trivalent or higher polyvalent carboxylic acids are used, the

total amount of these polyvalent carboxylic acids is preferably in the above range.

Examples of hydroxycarboxylic acids include lactic acid, citric acid, malic acid, tartaric acid, hydroxyacetic acid, 3-hydroxybutyric acid, p-hydroxybenzoic acid, p-(2-hydroxyethoxy)benzoic acid, 4-hydroxycyclohexane carboxylic acid, or ester-forming derivatives thereof. The amount of the hydroxycarboxylic acid with respect to the entire polyvalent carboxylic acid component is preferably 20 mol% or less, more preferably 10 mol% or less, and further preferably 5 mol% or less. In the case where two or more hydroxycarboxylic acids are used, the total amount of these hydroxycarboxylic acids is preferably in the above range.

Examples of ester-forming derivatives of polyvalent carboxylic acids or hydroxycarboxylic acids include alkyl esters, acid chlorides, and acid anhydrides thereof.

<Polyhydric alcohol components

The main polyhydric alcohol component constituting the polyester resin (B) is preferably a glycol. The phrase "the main polyhydric alcohol component is a glycol" means that the glycol is contained in an amount of more than 50 mol%, preferably 70 mol% or more, more preferably 80 mol% or more, and further preferably 90 mol% or more with respect to the entire polyhydric alcohol component. In the case where two or more glycols are used, the total amount of these glycols is preferably in the above range.

Examples of glycols include: alkylene glycols such as ethylene glycol, 1,2-propylene glycol, 1,3-propylene glycol, diethylene glycol, triethylene glycol, 1,2-butylene glycol, 1,3-butylene glycol, 2,3-butylene glycol, 1,4-butylene glycol, 1,5-pentanediol, neopentylglycol, 1,6-hexanediol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,4-cyclohexanediethanol, 1,10-decamethylene glycol, and 1,12-dodecanediol; aliphatic glycols such as polyethylene glycol, polytrimethylene glycol, and polytetramethylene glycol; and aromatic glycols such as hydroquinone, 4,4'-dihydroxybisphenol, 1,4-bis(β-hydroxyethoxy)benzene, 1,4-bis(β-hydroxyethoxyphenyl)sulfone, bis(p-hydroxyphenyl)ether, bis(p-hydroxyphenyl)sulfone, bis(p-hydroxyphenyl)methane, 1,2-bis(p-hydroxyphenyl)ethane, bisphenol A, bisphenol C, 2,5-naphthalenediol, and glycols obtained by adding ethylene oxide to these glycols.

Among these glycols, alkylene glycols are preferable, and ethylene glycol, 1,3-propylene glycol, 1,4-butylene glycol, and 1,4-cyclohexanedimethanol are more preferable. In addition, the alkylene glycols may contain a substituent or an alicyclic structure in the molecular chain thereof, and two or more of the alkylene glycols may be used at the same time.

As a polyhydric alcohol other than these glycols, a trivalent or higher polyhydric alcohol may also be used in a small amount, and a trivalent to tetravalent polyhydric alcohol is preferable. Examples of trivalent or higher polyhydric alcohols include trimethylolmethane, trimethylolethane, trimethylolpropane, pentaerythritol, glycerol, and hexanetriol.

The amount of the trivalent or higher polyhydric alcohol with respect to the entire polyhydric alcohol component is preferably 20 mol% or less, more preferably 10 mol% or less, and further preferably 5 mol% or less. In the case where two or more trivalent or higher polyhydric alcohols are used, the total amount of the polyhydric alcohols is preferably in the above range.

In addition, use of a cyclic ester is also permitted. Examples of cyclic esters include ε-caprolactone, β-propiolactone, β-methyl-β-propiolactone, δ-valerolactone, glycolide, and lactide. Moreover, examples of ester-forming derivatives of polyhydric alcohols include esters of lower aliphatic carboxylic acids such as acetates of polyhydric alcohols.

The amount of the cyclic ester with respect to the total amount of the entire polyvalent carboxylic acid component and the entire polyhydric alcohol component is preferably 20 mol% or less, more preferably 10 mol% or less, and further preferably 5 mol% or less. In the case where two or more cyclic esters are used, the total amount of these cyclic esters is preferably in the above range.

The polyester resin (B) is preferably a polymer composed of only one monomer selected from ethylene terephthalate, butylene terephthalate, propylene terephthalate, 1,4-cyclohexanedimethylene terephthalate, ethylene naphthalate, butylene naphthalate, and propylene naphthalate, or a copolymer composed of two or more of the above monomers, and the polyester resin (B) is more preferably polyethylene terephthalate or a copolymer composed of ethylene terephthalate and at least one of the above monomers other than ethylene terephthalate, and particularly preferably polyethylene terephthalate. The copolymer composed of ethylene terephthalate and at least one of the above monomers other than ethylene terephthalate contains a component derived from the ethylene terephthalate monomer preferably in an amount of 70 mol% or more, more preferably in an amount of 80 mol% or more, and further preferably in an amount of 90 mol% or more.

<Polymerization catalyst>

The polyester resin (B) is produced by using a polymerization catalyst containing an aluminum compound and a phosphorus compound as mentioned above.

<Aluminum compound>

The aluminum compound constituting the polymerization catalyst of the polyester resin (B) is not limited as long as the aluminum compound is soluble in a solvent, and known aluminum compounds can be used without limitation. Examples of the aluminum compound include: carboxylates such as aluminum formate, aluminum acetate, basic aluminum acetate, aluminum propionate, aluminum oxalate, aluminum acrylate, aluminum laurate, aluminum stearate, aluminum benzoate, aluminum trichloroacetate, aluminum lactate, aluminum citrate, aluminum tartrate, and aluminum salicylate; inorganic acid salts such as aluminum chloride, aluminum hydroxide, aluminum hydroxychloride, aluminum nitrate, aluminum sulfate, aluminum carbonate, aluminum phosphate, and aluminum phosphonate; aluminum alkoxides such as aluminum methoxide, aluminum ethoxide, aluminum n-propoxide, aluminum isopropoxide, aluminum n-butoxide, and aluminum t-butoxide; chelate compounds such as aluminum acetylacetonate, aluminum ethylacetoacetate, and aluminum ethylacetoacetate di-isopropoxide; and organic aluminum compounds such as trimethylaluminum and triethylaluminum and partially hydrolyzed products thereof, reaction products composed of aluminum alkoxides or aluminum chelate compounds and hydroxycarboxylic acids, composite oxides of aluminum, such as aluminum oxide, ultrafine particle aluminum oxide, aluminum silicate, those containing aluminum and titanium, silicon, zirconium, alkali metals, alkaline earth metals, or the like; etc. Among these compounds, at least one compound selected from carboxylates, inorganic acid salts, and chelate compounds is preferable; among these compounds, at least one compound selected from aluminum acetate, basic aluminum acetate, aluminum chloride, aluminum hydroxide, aluminum hydroxychloride, and aluminum acetylacetonate is more preferable; at least one compound selected from aluminum acetate, basic aluminum acetate, aluminum chloride, aluminum hydroxide, aluminum hydroxychloride, and aluminum acetylacetonate is further preferable; and at least one compound selected from aluminum acetate and basic aluminum acetate is particularly preferable; and basic aluminum acetate is most preferable.

The above aluminum compound is preferably an aluminum compound that is soluble in a solvent such as water or a glycol. Solvents that can be used in the preparation of the polyester resin (B) are water and alkylene glycols. Examples of alkylene glycols include ethylene glycol, diethylene glycol, triethylene glycol, propylene glycol, dipropylene glycol, tripropylene glycol, trimethylene glycol, ditrimethylene glycol, tetramethylene glycol, ditetramethylene glycol, and neopentyl glycol. At least one solvent selected from water, ethylene glycol, trimethylene glycol, and tetramethylene glycol is preferable, and water or ethylene glycol is more preferable.

The content of aluminum element in the polyester resin (B) is preferably 5 to 50 ppm by mass, and more preferably 7 to 40 ppm by mass, further preferably 10 to 30 ppm by mass, and particularly preferably 15 to 25 ppm by mass. If the content of aluminum element is less than 5 ppm by mass, sufficient polymerization activity is not exhibited in some cases. On the other hand, if the content of aluminum element exceeds 50 ppm by mass, the amount of aluminum-based foreign matter may be increased.

<Phosphorus compound>

The phosphorus compound constituting the polymerization catalyst of the polyester resin (B) is not particularly limited, and phosphonic acid-based compounds and phosphinic acid-based compounds are preferable since the compounds improve catalytic activity highly effectively, and among them, phosphonic acid-based compounds are more preferable since the compounds improve catalytic activity particularly effectively.

Among above phosphorus compounds, preferred is the phosphorus compound having phosphorus element and phenolic structure in the same molecule. The phosphorus compound is not particularly limited as long as the compound has phosphorus element and phenolic structure in the same molecule, and one or two or more of compounds selected from the group consisting of phosphonic acid-based compounds having phosphorus element and phenolic structure in the same molecule and phosphinic acid-based compounds having phosphorus element and phenolic structure in the same molecule are preferable because of its high ability of increasing polymerization activity, and one or two or more types of the phosphonic acid-based compounds having phosphorus element and phenolic structure in the same molecule are more preferable because of its significantly high ability of increasing polymerization activity.

The phosphorus compound having phosphorus element and phenolic structure in the same molecule is exemplified by the compounds with the formulae of $P(=O)R^1(OR^2)(OR^3)$ and $P(=O)R^1R^4(OR^2)$. $R^1$ represents a hydrocarbon group with 1 to 50 carbon atoms having a phenol moiety, or a hydrocarbon group with 1 to 50 carbon atoms having a substituent such as a hydroxyl group, a halogen group, an alkoxyl group, or an amino group as well as phenolic structure. $R^4$ represents hydrogen, a hydrocarbon group with 1 to 50 carbon atoms, or a hydrocarbon group with 1 to 50 carbon atoms having a substituent such as a hydroxyl group, a halogen group, an alkoxyl group, or an amino group. $R^2$ and $R^3$ each independently represents hydrogen, a hydrocarbon group with 1 to 50 carbon atoms, or a hydrocarbon group with 1 to 50 carbon atoms having a substituent such as hydroxyl group or an alkoxyl group. The hydrocarbon group may have branching structure, alicyclic structure such as cyclohexyl group, or aromatic ring structure such as phenyl group or naphthyl group. The terminals of $R^2$ and $R^4$ may be bonded to each other.

The phosphorus compound having phosphorus element and phenolic structure in the same molecule is exemplified by p-hydroxyphenylphosphonic acid, dimethyl p-hydroxyphenyl phosphonate, diethyl p-hydroxyphenyl phosphonate, diphenyl p-hydroxyphenyl phosphonate, bis(p-hydroxyphenyl)phosphinic acid, methyl bis(p-hydroxyphenyl) phosphinate, phenyl bis(p-hydroxyphenyl) phosphinate, p-hydroxyphenyl phosphinic acid, methyl p-hydroxyphenyl phosphinate, phenyl p-hydroxyphenyl phosphinate.

In addition to the examples described above, the phosphorus compound having phosphorus element and phenolic structure in the same molecule is exemplified by a phosphorus compound having phosphorus element and hindered phenol structure in the same molecule (phenol structure in which at least one alkyl group having a tertiary carbon (preferably alkyl groups having a tertiary carbon in a benzyl position, such as t-butyl group and thexyl group; for example, neopentyl group) is bonded in one or two ortho-positions with respect to a hydroxyl group), preferably a phosphorus compound having phosphorus element and the following structure represented by Chemical Formula A in the same molecule, and more preferably the following dialkyl 3,5-di-tert-butyl-4-hydroxybenzyl phosphonate represented by Chemical Formula B. The phosphorus compound for the production of the polyester resin (B) is preferably the following dialkyl 3,5-di-tert-butyl-4-hydroxybenzyl phosphonate represented by Chemical Formula B, and may additionally contain a modified product of dialkyl 3,5-di-tert-butyl-4-hydroxybenzyl phosphonate. Details of the modified product will be described later.

[Chemical Formula 1]

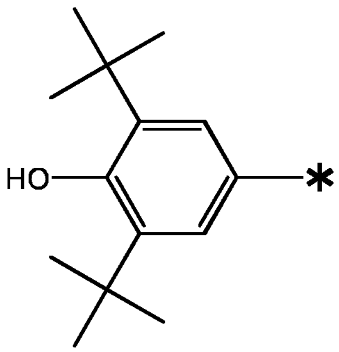

**(Chemical Formula A)**

(In Chemical Formula A, * represents a point of attachment.)

[Chemical Formula 2]

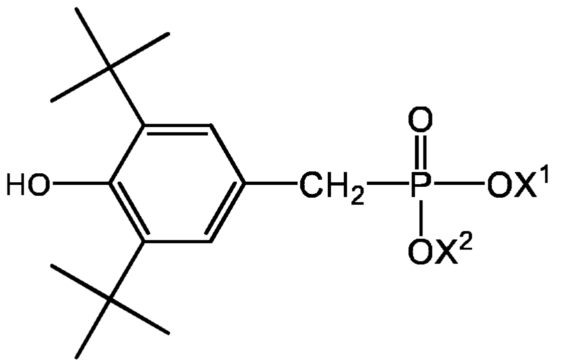

**(Chemical Formula B)**

(In Chemical Formula B, $X^1$ and $X^2$ each represents hydrogen, or an alkyl group with 1 to 4 carbon atoms)

In this specification, the polyester resin in which at least one type of hindered phenol structure is detected by a method involving measurement of P-NMR of a solution obtained by dissolving the polyester resin in hexafluoroisopropanol-based solvent refers to a polyester resin "having hindered phenol structure". In other words, the polyester resin (B) is preferably a polyester resin produced with a polymerization catalyst containing a phosphorus compound having phosphorus element and hindered phenol structure in the same molecule. The method (P-NMR detection method) for detecting the hindered phenol structure in the polyester resin (B) is described later.

In chemical Formula B, the number of carbon atoms of the alkyl group as $X^1$ and $X^2$ is preferably 1 to 4 and more preferably 1 to 2. In particular, an ethyl ester compound having two carbon atoms is preferable, since it is commercially available as Irganox1222 (manufactured by BASF) and can easily be acquired.

The phosphorus compound is preferably heat treated in a solvent before use. Details of the heat treatment will be described later. When the phosphorus compound is above dialkyl 3,5-di-tert-butyl-4-hydroxybenzyl phosphonate represented by Chemical Formula B, a part of the dialkyl 3,5-di-tert-butyl-4-hydroxybenzyl phosphonate undergoes a structural change in the heat treatment. For example, detachment of t-butyl group, hydrolysis of ethyl ester group, and changes to hydroxyethyl ester exchange structure (ester exchange structure with ethylene glycol) occur. Accordingly, structurally changed phosphorus compounds of dialkyl 3,5-di-tert-butyl-4-hydroxybenzyl phosphonate represented by Chemical Formula B are included in the phosphorus compounds of the present invention. The detachment of t-butyl group occurs significantly under high temperature environment in the polymerization step.

In the following, 9 phosphorus compounds derived from diethyl 3,5-di-tert-butyl-4-hydroxybenzyl phosphonate through partial structural changes are shown as phosphorus compounds. The content of each of the phosphorus compound after structural changes in glycol solution can be quantified by a method involving measurement of P-NMR.

[Chemical Formula 3]

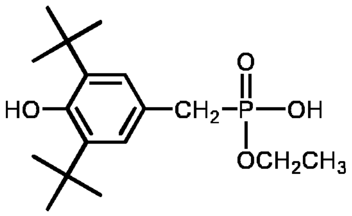
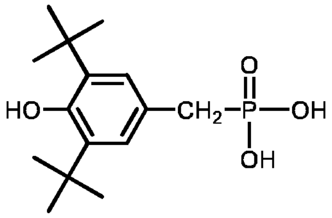
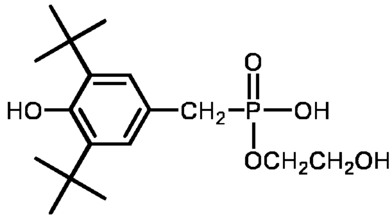

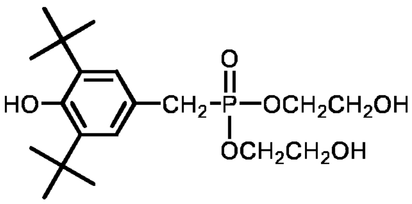
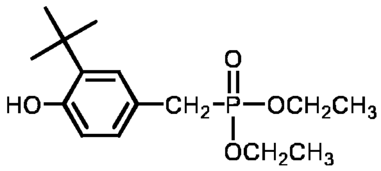
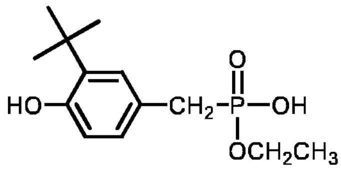

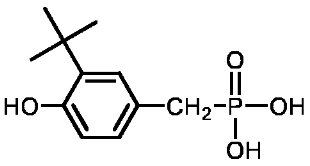
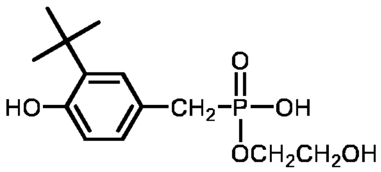
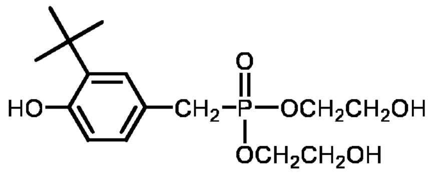

Therefore, as the phosphorus compound in the present invention, modified products of the dialkyl 3,5-di-tert-butyl-4-hydroxybenzyl phosphonate represented by the nine above chemical formulae may be included, in addition to the dialkyl 3,5-di-tert-butyl-4-hydroxybenzyl phosphonate.

When Irganox1222 is used as the phosphorus compound, at least one of 9 types of residues of the phosphorus compounds as shown in the following Table 1 are contained in the polyester resin. When at least one type from 9 types of hindered phenol structure shown in Table 1 is detected by the method involving measurement of P-NMR, the polyester resin (B) is regarded to be a polyester resin produced with a polymerization catalyst containing a phosphorus compound having phosphorus element and hindered phenol structure in the same molecule. The phosphorus compound having hindered phenol structure allows the polymerization catalyst to work with sufficient polymerization activity, and also enables a decrease in catalyst cost.

[Table 1]

| Structure from phosphorus compound / Phenolic structure | 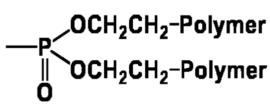 | 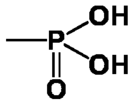 | 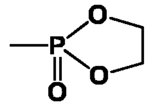 |
|---|---|---|---|
| 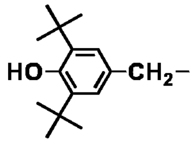 | (Chemical Formula 1) | (Chemical Formula 4) | (Chemical Formula 7) |
| 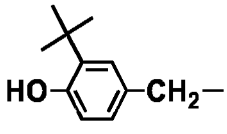 | (Chemical Formula 2) | (Chemical Formula 5) | (Chemical Formula 8) |
| 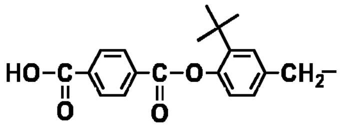 | (Chemical Formula 3) | (Chemical Formula 6) | (Chemical Formula 9) |

In the present invention, the phosphorus compound preferably has at least one type of hindered phenol structure from above structure represented with Chemical Formulae 1, 4, and 7.

The content of the phosphorus element in the polyester resin (B) is preferably 5 to 1000 ppm by mass, more preferably 10 to 500 ppm by mass, further preferably 15 to 200 ppm by mass, particularly preferably 20 to 100 ppm by mass, and most preferably 30 to 50 ppm by mass. If the content of phosphorus element is less than 5 ppm by mass, the polymerization activity may decrease or the amounts of aluminum-based foreign matter may increase. On the other hand, if the content of phosphorus element exceeds 1000 ppm by mass, the polymerization activity may decrease or the addition amount of the phosphorus compound becomes high, and the cost of the catalyst increases.

In polyester resin (B), a molar ratio of the phosphorus element to the aluminum element (hereafter referred to as "residual molar ratio of the phosphorus element to the aluminum element" in order to distinguish the residual molar ratio from the "added molar ratio of the phosphorus element to the aluminum element" as described below) is preferably 1.00 to 5.00, more preferably 1.10 to 4.00, further preferably 1.20 and 3.50, and particularly preferable 1.25 to 3.00. As described above, the aluminum element and the phosphorus element in the polyester resin (B) are originating from the aluminum compound and the phosphorus compound contained in the polymerization catalyst for the polyester resin (B). The use of the aluminum compound along with the phosphorus compound at a specific ratio enables functional formation of a complex having catalytic activity in a polymerization system, thereby allowing the catalyst to work with sufficient polymerization activity. Although the catalyst/production cost of a polyester resin produced with a polymerization catalyst containing an aluminum compound and a phosphorus compound is high compared to a polyester resin produced with a catalyst such as an antimony catalyst, the use of the aluminum compound along with the phosphorus compound at a specific ratio allows a catalyst to work with sufficient polymerization activity with a decrease in catalyst cost. A residual mole ratio of the phosphorus element with respect to the aluminum element of less than 1.00 causes decreases in thermal stability and thermal oxidation stability and an increase in the amount of aluminum-based foreign matter. In contrast, a residual mole ratio of the phosphorus element to the aluminum element of more than 5.00 indicates that the amount of the phosphorus compound added is too high, resulting in an increase in catalyst cost.

The aluminum compound and the phosphorus compound may be used as a polymerization catalyst to produce the polyester resin (B) in combination with another polymerization catalyst such as the antimony compound, the germanium compound, and the titanium compound, to the extent that problems in characteristics, processability, and color tone of the polyester resin (B) are not caused. The polyester resin (B) comprises antimony element at a content of preferably 30 ppm by mass or less, germanium element at a content of preferably 10 ppm by mass or less, and titanium element at a content of preferably 3 ppm by mass or less. However, minimal amounts of such other polymerization catalysts should be used.

The content of the aluminum element corresponding to the aluminum-based foreign matter in the polyester resin (B) is preferably 3000 ppm by mass or less, more preferably 2800 ppm by mass or less, further preferably 2000 ppm by mass or less, and further more preferably 1500 ppm by mass or less. The aluminum-based foreign matter is

generated by the aluminum compound for the polymerization catalyst and is a foreign matter insoluble in the polyester resin (B). The content of the aluminum-based foreign matter exceeding above range may cause quality deterioration of molded body due to fine foreign matters insoluble in the polyester resin (B). In addition, clogging of a filter in filtration of the polyester resin may be increased in polycondensation and molding steps. Although a preferred lower limit of the content of the aluminum element corresponding to the aluminum-based foreign matter is preferably 0 ppm by mass, the lower limit is approximately 300 ppm by mass due to technical difficulties.

In this specification, as is clear from the measurement of aluminum element by a method described later, the content of the aluminum element corresponding to the aluminum-based foreign matter is an index to evaluate a relative amount of the aluminum-based foreign matter based on the amount of the aluminum element, and does not indicate an absolute amount of the aluminum-based foreign matter contained in the polyester resin.

The polyester resin (B) has an intrinsic viscosity of preferably from 0.56 to 0.90 dl/g, more preferably 0.60 to 0.80 dl/g, and further preferably 0.65 to 0.75 dl/g. When the polyester resin (B) has an intrinsic viscosity of less than 0.56 dl/g, transport of the polyester resin (B) by air causes generation of friction among polyester resin pellets or friction among polyester resin pellets and air supply pipelines, resulting in large quantities of fine particles in some cases. The production of the polyester resin (B) having an intrinsic viscosity of more than 0.62 dl/g by melt polymerization alone may cause a decrease in economic efficiency; hence, the polyester resin (B) having an intrinsic viscosity of more than 0.62 dl/g is preferably produced through solid phase polymerization of the polyester resin (B) produced by melt polymerization.

The polyester resin (B) has an intrinsic viscosity retention rate of preferably 93% or more, more preferably 94% or more, and further preferably 95% or more. The polyester resin (B) having an intrinsic viscosity retention rate of less than 93% may cause lowered intrinsic viscosity retention rate of the polyester resin composition (C), leading to insufficient recyclability. The polyester resin (B) has the upper limit of the intrinsic viscosity retention rate of preferably 100%, however, the limit is approximately 99% due to technical difficulties.

The method for producing the polyester resin (B) is described below.

[Polyester resin composition (C)]

The polyester resin composition (C) is preferably produced by mixing the polyester resin (A) and the polyester resin (B) in a mass ratio of from 5 : 95 to 95 : 5. That is, in the polyester resin composition (C), an amount of the polyester resin (A) with respect to 100 parts by mass of a total amount of the polyester resin (A) and the polyester resin (B) is preferably from 5 to 95 parts by mass. Controlling of the amount of the polyester resin (A) to above range may prevent coloring and a decrease in molecular weight of the polyester resin composition (C). In this specification, the prevention of coloring of the polyester resin means that an L-value and a b-value of the polyester resin composition are kept from being raised even after several times of recycling i.e., re-kneading. When the blend ratio of the polyester resin (A) is more than 95 parts by mass, the intrinsic viscosity retention rate of the polyester resin composition (C) may become low, resulting in insufficient recyclability. In contrast, when the blend ratio of the polyester resin (A) is less than 5 parts by mass, prevention effect of coloring may be saturated, and economic efficiency may be decreased. Even though a residual mole ratio of the phosphorus element to the aluminum element controlled to above range, the polyester resin (B) is produced with the polymerization catalyst containing an aluminum compound and a phosphorus compound, therefore, catalyst cost, i.e., production cost is high compared that in production of polyester resins with a catalyst of, for example, an antimony catalyst. However, a combination of the polyester resin (A) and the polyester resin (B) enables an increase in recyclability with a decrease in production cost. The polyester resin (A) blended in higher ratio can contribute to reduction in the production cost of the polyester resin composition (C), however, the color tone of the polyester resin composition is more likely to be decreased as the number of recycling cycles increase. In contrast, the polyester resin (B) blended in higher ratio can contribute to reduction in deterioration in color tone of the polyester resin composition (C) even after several times of recycling, however, the production cost may be increased. The mass ratio between the polyester resin (A) and the polyester resin (B) is more preferably from 20 : 80 to 80 : 20 and further preferably from 25 : 75 to 75 : 25.

The polyester resin composition (C) can be produced by dry blending the polyester resin (A) and the polyester resin (B). Alternatively, the polyester resin (A) and the polyester resin (B) can be kneaded by a method of melt-extrusion, to produce the polyester resin composition (C). In this case, the polyester resin (A) and the polyester resin (B) are dry blended at first, and then the polyester resin composition (C) can be produced by melting and kneading the blended resins with a general kneading apparatus of resins such as banbury mixer, kneader, single-screw extruder, twin-screw extruder, four-screw extruder, and single-screw planetary extruder. Among them, twin-screw extruder, four-screw extruder, and single-screw planetary extruder are preferable due to activated surface renewal. The extruder preferably has a vent port of at least one, preferably 2 or more, and further preferably 3 or more. In a preferred embodiment, the vent port is connected to a decompression system to prevent degradation of the polyester resin composition (C).

The polyester resin composition (C) has an intrinsic viscosity of preferably from 0.56 to 0.90 dl/g, more preferably

0.60 to 0.80 dl/g, and further preferably 0.70 to 0.75 dl/g. The intrinsic viscosity of the polyester resin composition (C) of more than 0.90 dl/g may cause a decrease in economic efficiency.

The polyester resin composition (C) has an intrinsic viscosity retention rate of preferably 89% or more, more preferably 90% or more, further preferably 92% or more, and particularly preferably 94% or more. The intrinsic viscosity retention rate of the polyester resin composition (C) of less than 89% may cause insufficient recyclability. Although the upper limit of the intrinsic viscosity retention rate of the polyester resin composition (C) is preferably 100%, the limit is approximately 99% due to technical difficulties. The polyester resin composition (C) preferably has a higher intrinsic viscosity retention rate than that of the polyester resin (A). The description of merely 'intrinsic viscosity retention rate' regarding the polyester resin composition (C) means the intrinsic viscosity retention rate after one-time of re-kneading of the polyester resin composition (C) in this specification. In addition, other physical properties of the polyester resin composition (C) indicate physical properties after one-time of re-kneading of the polyester resin composition (C) unless otherwise specified.

The polyester resin composition obtained by one time of re-kneading of the polyester resin composition (C) contains CT (cyclic trimer) in an amount of preferably 6600 ppm or less. The amount of CT is more preferably 6400 ppm or less, and further preferably 6000 ppm or less. Although the lower limit is not limited, the lower limit is approximately 2500 ppm due to technical difficulties. The amount of CT of more than 6600 ppm may cause mold fouling in a molding step.

In the subtraction of the CT amount of the polyester resin composition obtained by one time of re-kneading of the polyester resin composition (C) from the CT amount of the polyester resin composition obtained by three times of re-kneading of the polyester resin composition (C) (hereinafter, an obtained value is referred to as ΔCT), the ΔCT is preferably 900 ppm or less. The ΔCT is more preferably 700 ppm or less, and further preferably 600 ppm or less. Although the lower limit of ΔCT is preferably 0 ppm, the lower limit is approximately 200 ppm due to technical difficulties. The ΔCT of more than 900 ppm may cause mold fouling in a molding step.

When the polyester resin composition (C) comprises the polyester resin (B) produced with the phosphorus compound available as above Irganox1222, P-NMR measurement of the polyester resin composition (C) detects at least one of nine types of hindered phenol structure shown in Table 1. When a phosphorus compound having phosphorus element and hindered phenol structure in the same molecule is used as a polymerization catalyst other than Irganox1222, hindered phenol structure is detected similarly as above.

[Hollow molded body (D)]

A method for producing a hollow molded body (D) is not particularly limited. For example, the hollow molded body (D) can be produced by a method (a method via melt-kneading) involving melt-molding of the polyester resin composition (C) into the hollow molded body, alternatively, a method (a direct molding method) involving directly supplying dry blended polyester resin (A) and polyester resin (B) to equipment for producing a hollow molded body by molding.

Since the polyester resin (B) is produced with a polymerization catalyst comprising an aluminum compound and a phosphorus compound, catalyst cost, i.e., production cost is high compared that in production of polyester resins with a catalyst of, for example, an antimony catalyst. However, the use of the polyester resin (A) in combination with the polyester resin (B) in the production of the hollow molded body (D) enables an increase in recyclability with a decrease in production cost. The polyester resin (A) blended in higher bland ratio can reduce the production cost of the hollow molded body (D), however, the color tone of the polyester resin composition is more likely to be decreased as the number of recycling cycles increases. In contrast, the polyester resin (B) blended in higher ratio can contribute to reduction in deterioration in color tone of the polyester resin composition (C) even after several times of recycling, however, the production cost may be increased. The blend ratio between the polyester resin (A) and the polyester resin (B) can be appropriately determined according to market requirements, and the polyester resin (A) and the polyester resin (B) may preferably be blended in a mass ratio of from 5 : 95 to 95 : 5 to produce a hollow molded body (D).

The fields of use of the hollow molded body (D) are not particularly limited, and the hollow molded body (D) is applicable to a beverage container for mineral water, juice, wine, and whisky; a container for household and dish washing detergent; a container as a bottle of baby feeding, for food bottling, hair care products, and cosmetic products. Since the hollow molded body (D) is produced by molding the polyester resin composition (C) of high quality or of a polyester resin composition obtained by blending high-quality polyester resin (B), a container of the hollow molded body (D) collected after use can be regenerated and used as a polyester resin still having high quality, contributing to solving various problems, for example, resource depletion, marine debris, and global warming.

A method for producing a hollow molded body is not particularly limited. In one method, dry blend of the polyester resin (A) and the polyester resin (B) is vacuum dried and then molded with a molding machine, for example, extrusion molding machine or injection molding machine. In another method, the polyester resin composition (C) is introduced to a molding machine in a molten state to be molded into a bottomed preform which is then produced as a final product by a blow molding method such as stretch blow molding, direct blow molding, or extrusion blow molding. A molded body produced by a molding machine, such as extrusion molding machine or injection molding machine, can also be available

as a hollow molded body as a final product.

The hollow molded body may have multilayered structure including a gas barrier layer comprising polyvinyl alcohol or polymethaxylylene diamine adipate, or a light-blocking resin layer. In addition, the inside and the outside of the container of the hollow molded body can be coated with a layer of metals such as aluminum and diamond-like carbon by PVD (physical vapor deposition method) or CVD (chemical vapor deposition method).

The opening portion of the hollow molded body can have increased crystallinity by containing other resins such as polyethylene, and an inorganic nucleating agents such as talc.

The polyester resin composition (C) may be molded into the hollow molded body (D) by the method described above; for example, the polyester resin composition (C) produced through solid-phase polymerization and thus having increased intrinsic viscosity and decreased CT amount may be molded into a hollow molded body (D).

Each of the polyester resin composition (C), and a polyester resin composition obtained by dry blending the polyester resin (A) and the polyester resin (B) has controlled intrinsic viscosity retention rate and controlled coloration, therefore, the polyester resin composition can be preferably applied to products such as fibers, non-woven fabrics, sheets, and films, as well as a hollow molded body (D).

[Method for producing polyester resin (B)]

Next, a method for producing the polyester resin (B) will be described. The polyester resin (B) can be produced by a method comprising conventional steps except that the polyester polymerization catalyst containing an aluminum compound and a phosphorus compound is used for producing polyester in the present invention. In addition, the polymerization catalyst is preferably added in a manner satisfying the following (4) and (5), and more preferably in a manner further satisfying the following (6) in addition to above (4) and (5). Preferred numerical ranges of the following (4) to (6) are described above.

(4) The polyester resin (B) comprises aluminum element at a content of from 5 to 50 ppm by mass.
(5) The polyester resin (B) comprises phosphorus element at a content of from 5 to 1000 ppm by mass.
(6) The polyester resin (B) comprises the aluminum element and the phosphorus element at a residual mole ratio of the phosphorus element with respect to the aluminum element of 1.00 or more and 5.00 or less.

The polyester resin (B) is preferably produced by a method comprising a first step of synthesizing polycondensate (low-order condensate), or oligomer of polyester as an intermediate, and a second step of conducting polycondensation of the intermediate.

Also, a solution 'S' obtained by dissolving an aluminum compound and a solution 'T' obtained by dissolving a phosphorus compound are preferably added to the intermediate after the first step and before the second step in a manner satisfying the following (7) to (9). The polycarboxylic acid and ester-forming derivative thereof, the hydroxycarboxylic acid allowed to be added in small amount and the ester-forming derivative thereof, and the cyclic ester allowed to be added in small amount are not distill off from the reaction system in the polymerization step to produce the polyester resin (B), and all the use amount of the catalyst initially added to the system remains in the obtained polyester resin (B); hence, the mass of the polyester produced can be calculated from the amount of the above monomers.

(7) The amount of the aluminum element added with respect to the polyester resin (B) produced is from 5 to 50 ppm by mass, more preferably 7 to 40 ppm by mass, further preferably 10 to 30 ppm by mass, and particularly preferably 15 to 25 ppm by mass.
(8) The amount of the phosphorus element added with respect to the polyester resin (B) produced is from 5 to 1500 ppm by mass, more preferably 10 to 500 ppm by mass, further preferably 20 to 200 ppm by mass, and particularly preferably 30 to 100 ppm by mass.
(9) The mole ratio of the addition amount (8) of the phosphorus element with respect to the addition amount (7) of the aluminum element (hereinafter may be referred to as 'addition mole ratio of the phosphorus element with respect to the aluminum element') is 1.00 or more and 7.00 or less, more preferably 1.50 or more and 6.00 or less, and further preferably 2.00 or more and 5.00 or less.

The method for producing the polyester which is the low-order condensate (low polymer) or the oligomer synthesized in the first step is not particularly limited.

The polyester resin (B) can be produced by a method including conventional steps except that a polyester polymerization catalyst containing an aluminum compound and a phosphorus compound is used and the amount of the polyester polymerization catalyst is taken into consideration. For example, polyethylene terephthalate can be produced by a direct esterification method in which terephthalic acid, ethylene glycol, and other copolymerization components, if needed, are reacted directly to be esterified while water is distilled off from the system, polycondensation is subsequently

carried out under normal or reduced pressure, alternatively an ester exchange method in which dimethyl terephthalate, ethylene glycol, and other copolymerization components, if needed, are reacted directly to be esterified while methanol is distilled off from the system, polycondensation is subsequently carried out under normal or reduced pressure. Further, solid-phase polymerization may be conducted to increase an intrinsic viscosity, if needed. The amount (mass) of the polyester resin (B) produced can be calculated from the amount (mass) of polycarboxylic acids including dicarboxylic acids as raw materials.

In either of these methods, the esterification or ester exchange reaction may be conducted in one or multiple stages.

The polyester resin produced by melt polymerization can be additionally polymerized by solid-phase polymerization method. The solid-phase polymerization can be conducted with a continuous reactor similarly as melt polymerization.

When continuous polycondensation apparatus include three or more reactors (i.e., three-stage polymerization method including an initial stage, an intermediate stage, and a late stage), the first stage is defined as the initial stage, the final stage is defined as the late stage, and stages from the second stage to the stage before the final stage are defined as the intermediate stage of the polycondensation reaction. Preferably, the reaction proceeds in the intermediate stage under polymerization reaction conditions are controlled to intermediate conditions between the initial stage and the final stage. Preferably, the degrees of increases in intrinsic viscosities in each stage are smoothly distributed.

<Solid phase polymerization method>

In order to increase intrinsic viscosity, a polyester resin produced by melt polymerization method may be subjected to solid phase polymerization. The solid phase polymerization may be a batch type polymerization method or a continuous polymerization method, but the solid phase polymerization is preferably carried out with a continuous device similarly as melt polymerization.

The polyester resin produced by melt-polymerization is additionally polymerized preferably by solid-phase polymerization method in order to decrease CT amount in the polyester resin (B). The polyester obtained in the second step (melt-polymerization) is powdered and granulated and then subjected to solid-phase polymerization. The powdered and granulated polyester is in the shape of chips, pellets, flakes, or powder, and chips and pellets are preferable among them.

The solid-phase polymerization may be conducted by heating powdered and granulated polyester at a temperature not exceeding the melting point of the polyester, under circulation of an inert gas or under reduced pressure. The solid-phase polymerization may be conducted in one stage or in multiple stages.

The powdered and granulated polyester to be subjected to solid-phase polymerization step may be pre-crystallized by heating at a temperature lower than the temperature at which solid-phase polymerization is conducted first, and then the polyester may be subjected to solid-phase polymerization.

The pre-crystallization step may be conducted by heating the powdered and granulated polyester in a dried state, normally at a temperature of from 120 to 200°C, preferably 130 to 180°C, for 1 minute to 4 hours. Alternatively, the pre-crystallization step may be conducted by heating the powdered and granulated polyester in an atmosphere of water vapor, an inert gas containing water vapor, or air atmosphere containing water vapor, normally at a temperature of from 120 to 200°C for 1 minute or more.

The polyester obtained by melt polymerization as described above is then, for example, chipped and transported from pipes to a storage silo or solid-phase polymerization step. When the chips are transported, for example, by forced low-density transportation method using air, large impact force is applied on the surface of the melt-polymerized polyester chips due to collision with piping, causing large amounts of fine particles and film-form materials. These fine particles and film-form materials can promote crystallization of polyesters. When large amounts of fine particles and film-form materials exist, a molded body may be produced with significantly decreased transparency. Accordingly, in one preferred embodiment, a step for removing the fine particles and the film-form materials is included.

The method for removing the fine particles and the film-form materials is not particularly limited. The fine particles and the film-form materials may be removed, for example, by a method including a vibration sealing step, an air stream classification step by air stream, or a gravitation classification step, which are separately provided during the intermediate step between the solid phase polymerization step and a step provided after the solid phase polymerization step.

When the catalyst containing the aluminum compound and the phosphorus compound is used, the catalyst may be added in the form of preferably a slurry or a solution, more preferably a solution obtained by dissolving the catalyst in a solvent such as water or glycol, further preferably a solution obtained by dissolving the catalyst in a solvent of water and/or glycol, and most preferably a solution obtained by dissolving the catalyst in ethylene glycol.

The solution 'S' obtained by dissolving the aluminum compound and the solution 'T' obtained by dissolving the phosphorus compound are preferably added in any step before the start of polymerization reaction in the production process of the polyester resin (B), and the solutions are added in a manner such that the contents (residual amount) of

the aluminum element and the phosphorous element in the polyester resin (B) satisfy the ranges specified by above (4) to (6).

By adding the solution 'S' obtained by dissolving the aluminum compound and the solution 'T' obtained by dissolving the phosphorus compound in the amounts that allows the aluminum element and the phosphorous element contents (residual amount) in the polyester resin (B) to satisfy ranges specified by above (4) to (6), a complex having catalytic activity is formed functionally in the polymerization system, and the catalyst can work with sufficient polymerization activity. In addition, the generation of the aluminum-based foreign matter can be prevented.

All the use amount of aluminum atom initially added as a catalyst in the system remains in the polyester resin (B) produced through polymerization, despite reduced pressure environment in polymerization of the polyester resin. In other words, the amount of the aluminum compound is almost unchanged before and after polymerization; addition of the aluminum atom in an amount of from 5 to 50 ppm by mass with respect to the intermediate results in the content of the aluminum atom in the polyester resin (B) of from 5 to 50 ppm by mass.

Also, the phosphorus compound that works along with the aluminum compound as a catalyst is partially distilled off from the system under reduced pressure environment to polymerize the polyester resin, specifically, by approximately 10 to 40% of use amount initially added as the catalyst to the system. The percentage of the phosphorus compound removed from the system changes according to the addition mole ratio of the phosphorus element with respect to the aluminum element, basicity or acidity of the solution obtained by dissolving an aluminum compound added and the solution obtained by dissolving the phosphorus compound added, or a method for adding the aluminum compound-containing solution and the phosphorus compound-containing solution (whether the solutions are added in the form of one solution or added separately). Therefore, the amount of the phosphorus compound-containing solution added should appropriately be controlled so that an addition amount of the phosphorus compound in the polyester resin (B) as a final product preferably satisfies above (5).

The solution 'S' obtained by dissolving the aluminum compound and the solution 'T' obtained by dissolving the phosphorus compound are preferably added at the same time. In more preferred embodiment, the solution 'S' obtained by dissolving the aluminum compound and the solution 'T' obtained by dissolving the phosphorus compound may be prepared as a mixed solution in advance, by mixing them based on a ratio for adding them to the intermediate, and the obtained one solution is then added to the intermediate. The solutions may be made to one solution by a method of, for example, mixing the solutions in a tank or mixing them at confluence in the middle of piping for adding a catalyst in advance.

When the solutions or the one solution is added to a reaction chamber, the content of the reaction chamber is preferably stirred at higher speed. When the solutions or the one solution is added to piping connecting reaction chambers, apparatus such as an in-line mixer may be provided preferably to mix the solutions or the one solution quickly and uniformly.

In case where the solution 'S' obtained by dissolving the aluminum compound and the solution 'T' obtained by dissolving the phosphorus compound are separately added, a foreign matter originating from the aluminum compound is likely to be generated, causing a decrease in crystallization temperature during heating, an increase in crystallization temperature during cooling, and insufficient catalyst activity. The simultaneous addition of the aluminum compound and the phosphorus compound enables rapid and effective formation of a complex having polymerization activity from the aluminum compound and the phosphorus compound. In contrast, separate addition of the aluminum compound and the phosphorus compound causes insufficient formation of the complex from the aluminum compound and the phosphorus compound. In addition, the aluminum compound failed to form a complex with the phosphorus compound may precipitate as a foreign matter.

The solution 'S' obtained by dissolving the aluminum compound and the solution 'T' obtained by dissolving the phosphorus compound are preferably added before the start of polymerization reaction and after the completion of esterification reaction or ester exchange reaction, more preferably the solutions are added to the intermediate after the first step and before the second step. The addition of the solutions before the completion of the esterification reaction or the ester exchange reaction may cause an increase in the amount of aluminum-based foreign matter.

When the polyester resin (B) consists of at least one selected from polycarboxylic acids or ester-forming derivatives thereof and at least one selected from polyhydric alcohols or ester-forming derivatives thereof, the solution 'S' is preferably a glycol solution obtained by dissolving the aluminum compound and the solution 'T' is preferably a glycol solution obtained by dissolving the phosphorus compound.

<Heat treatment of phosphorus compound>

The phosphorus compound used to produce the polyester resin (B) is preferably a phosphorus compound after heat treatment in a solvent. The solvent is not limited as long as the solvent is at least one type selected from the group consisting of water and alkylene glycols. The alkylene glycol is preferably a solvent which can solve a phosphorus compound, and more preferably a glycol exemplified with ethylene glycol which is a constituent component of the polyester resin (B). The heat treatment of the phosphorus compound in the solvent is preferably conducted after the

phosphorus compound is dissolved in the solvent, however, the phosphorus compound may not be completely dissolved.

The heat treatment is conducted under the conditions of a heat treatment temperature of from preferably 170 to 196°C, more preferably 175 to 185°C, further preferably 175 to 180°C, for heat treatment time of preferably from 30 to 240 minutes, and more preferably 50 to 210 minutes.

The concentration of the phosphorus compound during the heat treatment is preferably 3 to 10% by mass.

The heat treatment allows the acidity of the phosphorus compound contained in the glycol solution to be kept constant, further, the use of the aluminum compound along with the phosphorus compound enables improvement in polymerization activity, a decrease in the amount of aluminum-based foreign matter caused by the polymerization catalyst, and a decrease in the amount of the phosphorus compound distilled off in the polymerization step, leading to improvement in economic efficiency. Therefore, the phosphorus compound is preferably subjected to the heat treatment.

The present application claims benefit of priority to Japanese Patent Application No. 2021-078749 filed on May 6, 2021. The entire contents of the specification of Japanese Patent Application No. 2021-078749 filed on May 6, 2021 are incorporated herein by reference.

EXAMPLES

Hereinafter, the present invention will be described by means of Examples, however, the present invention is not limited to the Examples. The evaluation methods used in Examples and Comparative Examples are as follows.

[Evaluation Method]

(1) Intrinsic viscosity (IV)

About 3 g of a polyester resin sample or preform thereof was frozen and ground, and the obtained ground product was dried at 140°C for 15 minutes. Then, 0.20 g of the dried sample was weighed and made to a solution with a volume of 20 ml by mixing the sample with a mixed solvent of 1,1,2,2-tetrachloroethane and p-chlorophenol (1:3, mass ratio). The solution was stirred at 100°C for 60 minutes to completely dissolve the sample, and then the solution was cooled to room temperature. The resulting solution was then filtrated through a glass filter. Thus obtained sample solution and the solvent were measured to determine dropping time with an Ubbelohde viscometer (manufactured by RIGO Co., Ltd.) controlled to a temperature of 30°C. The intrinsic viscosity [η] was determined according to the following equation in which the meanings of abbreviations were as follows.

$$[\eta] = (-1 + \sqrt{(1 + 4K'\eta Sp)}) / 2K'C$$

$$\eta Sp = (\tau - \tau 0)\ \tau 0$$

[η]: intrinsic viscosity (d1/g)
ηSp: specific viscosity (-)
K': the Huggins constant (= 0.33)
C: concentration (= 1 g/dl)
τ: dropping time of sample (sec)
τ0: dropping time of solvent (sec)

(2) Content of metal element in polyester resin

The polyester resin (A-1) described later was weighed in a platinum crucible, carbonized on an electric stove, and incinerated in a muffle furnace under the conditions of 550°C and 8 hours. The incinerated sample was dissolved in 1.2 M hydrochloric acid to prepare a sample solution. The sample solution prepared was measured under the following conditions to determine the contents of antimony element, germanium element, and titanium element in the polyester resin (A-1) by high-frequency inductively coupled plasma emission spectrometry. Similarly, the contents of antimony element, germanium element, and titanium element in polyester resins (E) to (G) described later were determined. In the measurement results, an element with a content of 1 ppm by mass or less was omitted from description. Further, the content of aluminum element in the polyester resin (B-1) described later was similarly determined by above method.

Apparatus: CIROS-120, manufactured by SPECTRO
Plasma output: 1400 W

Plasma gas: 13.0 L/min
Auxiliary gas: 2.0 L/min
Nebulizer: cross flow nebulizer
Chamber: cyclone chamber
Measurement wavelength: 167.078 nm

(3) Content of phosphorus element in polyester resin (B-1)

The polyester resin (B-1) was wet-decomposed with sulfuric acid, nitric acid, and perchloric acid, and then neutralized with aqueous ammonia. Ammonium molybdate and hydrazine sulfate were added to the prepared solution and then absorbance at a wavelength of 830 nm was measured with an ultraviolet-visible absorptiometer (UV-1700, manufactured by SHIMADZU CORPORATION). The phosphorus element content in the polyester resin (B) was determined from a calibration curve prepared in advance.

(4) Amount of aluminum-based foreign matter of polyester resin (B-1)

In an Erlenmeyer flask (size: 500 mL) with a stirring bar, 30 g of the polyester resin (B) and 250 mL of a solution containing p-chlorophenol/tetrachloroethane (3/1, mass ratio) were charged and the polyester resin was dissolved in the mixed solution by heating at a temperature of from 100 to 105°C for 1.5 hours with a hot stirrer. The resulting solution was filtrated to separate a foreign matter through a polytetrafluoroethylene membrane filter having a diameter of 47 mm and a pore size of 1.0 μm (PTFE membrane filter, product name: T100A047A, manufactured by TOYO ROSHI KAISHA,LTD). The effective filtration diameter was 37.5 mm. After the filtration, the filter was washed with 50 mL of chloroform and then dried.

The filtration surface of the membrane filter was subjected to a scanning fluorescent X-ray analyzer (ZSX100e, Rh line bulb: 4.0 kW, manufactured by RIGAKU) to quantify a content of aluminum element. The content of aluminum element was determined by measuring the center portion of the filter having a diameter of 30 mm. A calibration curve for the fluorescent X-ray analysis was prepared by using polyethylene terephthalate resin containing aluminum element at a known content and an apparent aluminum element content was represented by the unit of ppm. The measurement was conducted through detection of Al-Kα ray intensity at an X-ray output of 50 kV-70 mA with pentaerythritol as a spectroscopic crystal and PC (proportional counter) as a detector under the conditions of PHA (pulse height analyzer) of 100-300. The content of aluminum element in the polyethylene terephthalate resin for preparing a calibration curve was quantified by high-frequency inductively coupled plasma emission spectrometry.

(5) Detection of hindered phenol structure or residue by degradation of hindered phenol structure in sample

In 2.7 mL of a mixed solvent of hexafluoroisopropanol and deuterated benzene (1:1, mass ratio), 420 mg of sample was dissolved. To the resulting solution, 10 μL of deuterioacetone solution containing 25% of phosphoric acid was added, and the mixed solution was centrifuged to obtain a supernatant. Then, to the supernatant, trifluoroacetic acid was added in an amount of from 100 to 150 mg, and immediately after that, P-NMR measurement was conducted under the following conditions.

Apparatus: Fourier transform nuclear magnetic resonance device (AVANCE NEO 500, manufactured by BRUKER)

$^{31}$P resonance frequency: 202.456 MHz
Locking solvent: deuterated benzene
Flip angle of detected pulse: 65°
Incorporation time of data: 1.5 seconds
Retardation time: 0.5 seconds
Proton decoupling: full decoupling
Measurement temperature: from 25 to 35°C
Cumulative calculation numbers: from around 20000 to 30000 times

The followings are peak wavelengths of residues represented by the numbers of chemical formulae as shown in Table 1. Detection of these peak wavelengths indicated the presence of hindered phenol structure in a sample.

Chemical Formula 1: 34.5 ppm
Chemical Formula 2: 33.8 ppm
Chemical Formula 3: 31.9 ppm

Chemical Formula 4: 30.5 ppm
Chemical Formula 5: 30.1 ppm
Chemical Formula 6: 28.7 ppm
Chemical Formula 7: 53.6 ppm
Chemical Formula 8: 53.0 ppm
Chemical Formula 9: 51.3 ppm

(6) Quantification of cyclic trimer

A polyester resin sample was frozen and then ground or just ground, and 100 mg of the obtained sample was weighed precisely. The weighed sample was dissolved in 3 mL of a mixed solvent of hexafluoroisopropanol/chloroform (2/3, volume ratio), and the resulting solution was further diluted by adding 20 mL of chloroform. To the diluted solution, 10 mL of methanol was added to precipitate a polymer, and the precipitated polymer was separated by filtration. The filtrate was evaporated to dryness and made up to 10 mL with dimethylformamide. The cyclic trimer in the polyester resin or in the hollow molded body thereof was quantified by high performance liquid chromatography under the following conditions. The operation was repeated five times and the average of the measurement values was determined to be a CT content as a content of the cyclic trimer.

Apparatus: L-7000 (manufactured by Hitachi, Ltd.)
Column: μ-Bondasphere C18, 5 μ, 100 Å, 3.9 mm×15 cm (manufactured by Waters Corporation.)
Solvent: Eluent A: 2% acetic acid/water (v/v)

Eluent B: acetonitrile
Gradient B%: 10 → 100% (0 → 55 minutes)

Flow rate: 0.8 mL/min
Temperature: 30°C
Detector: UV-259 nm

(7) Intrinsic viscosity retention rate of sample

The polyester resin sample was vacuum dried at 140°C for 16 hours to obtain dried polyester resin with a moisture content of 150 ppm or less. The dried polyester resin was then subjected to re-kneading treatment once with a two-screw extruder under the following conditions, and the intrinsic viscosity of the re-kneaded polyester resin was measured to calculate an intrinsic viscosity retention rate according to the following equation. Also, the dried polyester resin was re-kneaded three times with the two-screw extruder under the following conditions, then the intrinsic viscosity of the re-kneaded polyester resin was measured, and an intrinsic viscosity retention rate was calculated according to the following equation. The intrinsic viscosity was measured by the same method as descried in above (1).

Two-screw extruder: KZW15TW-45/60MG-NH(-2200), manufactured by TECHNOVEL CORPORATION
Set temperature: 260°C (actual temperature: from 268 to 270°C)
Screw rotation speed: 200 rpm
Discharge rate: from 1.7 to 2.0 kg/h
Intrinsic viscosity retention rate (%) = 100 × intrinsic viscosity of re-kneaded polyester resin / intrinsic viscosity of sample polyester resin

The moisture content was measured by using 0.6 g of sample and a Karl Fischer moisture meter (CA-200, manufactured by Mitsubishi Chemical Analytech Co., Ltd.) based on coulometric titration under the conditions of 230°C, 5 minutes, and nitrogen gas flow rate of 250 mL/min.

(8) Measurement of color

A measurement cell was filled with approximately 50 g of amorphous polyester pellet as a sample, and measurement was conducted by rotating the measurement cell.
Apparatus: precision-type spectrophotometric colorimeter (type: TC-1500SX, manufactured by Tokyo Denshoku CO., LTD.)

Measurement method: a method according to JIS Z8722, transmitted light 0°, -0° method

Detecting element: silicon photodiode array
Light source: halogen lamp 12 V, 100 W, 2000 H
Measuring area: transmitted 25 mmφ
Temperature and humidity conditions: 25°C, RH50%
Measurement cell: φ35 mm, height 25 mm, rotating type (pellet)
Details of measurement: tristimulus values XYZ, CIE chromaticity coordinate, x=X/X+Y+Z, y=Y/X+Y+Z
Hunter Lab color system

The polyester resin was re-kneaded by the same method as described in above (7), and L-value and b-value of the polyester resin after one time of re-kneading and L-value and b-value of the polyester resin after three times of re-kneading were determined.

(9) Compositional analysis of polyester resin (A-1)

In 0.6 ml of a mixed solvent of deuterated hexafluoroisopropanol and deuterated chloroform (1:9, volume ratio), 20 mg of the polyester resin (A-1) was dissolved, and the mixture was centrifuged to collect a supernatant. By using the supernatant, $^1$H-NMR measurement was conducted under the following conditions.

Apparatus: Fourier transform nuclear magnetic resonance device (AVANCE NEO 600, manufactured by BRUKER)

$^1$H resonance frequency: 600.13 MHz
Locking solvent: deuterated chloroform
Flip angle: 30°
Incorporation time of data: 4 seconds
Retardation time: 1 second
Measurement temperature: 30°C
Cumulative calculation numbers: 128 times

Hereinafter, preparation of aluminum compound-containing ethylene glycol solution and phosphorus compound-containing ethylene glycol solution will be described.

<Preparation of aluminum compound-containing ethylene glycol solution s>

In a preparation tank, an aqueous solution of basic aluminum acetate having concentration of 20 g/L and ethylene glycol having equivalent volume to the aqueous solution (volume ratio) were charged, and the mixture was stirred at room temperature of 23°C for several hours. While the mixture was further stirred at a temperature of from 50 to 90°C for several hours under reduced pressure (3 kPa), water was distilled off from the reaction system, and an aluminum compound-containing ethylene glycol solution 's' with an aluminum compound at a concentration of 20 g/L was prepared.

<Preparation of phosphorus compound-containing ethylene glycol solutions t>

A phosphorus compound of Irganox1222 (manufactured by BASF) was charged in a preparation tank along with ethylene glycol. The mixture was heated by stirring at 175°C for 150 minutes under nitrogen substituted atmosphere, and a phosphorus compound-containing ethylene glycol solution 't' with a phosphorus compound at a concentration of 50 g/L was prepared.

<Polyester resin (B-1)>

In a 10 L stainless steel autoclave equipped with a stirrer, a prepared polyester oligomer composed of high-purity terephthalic acid and ethylene glycol and having an esterification rate of about 95% and high-purity terephthalic acid were charged, and an esterification reaction was carried out at 260°C to obtain an oligomer mixture. The obtained oligomer mixture had a terminal acid group concentration of 750 eq/ton and a terminal hydroxyl group ratio (OH%) of 59 mol%.

A mixed solution obtained by mixing the aluminum compound-containing ethylene glycol solution s and the phosphorus compound-containing ethylene glycol solution t, which were prepared by the above methods, was added to the obtained oligomer mixture. The mixed solution was previously prepared such that the content of aluminum element and phosphorus element were 21 ppm by mass and 58 ppm by mass with respect to the mass of the oligomer mixture,

respectively. The molar ratio of phosphorus element to aluminum element to be added was 2.41. The amount of the produced polyester resin (A) can be calculated from the amount of terephthalic acid to be added. In this Example, the mixed solution was added such that the amounts of aluminum element and phosphorus element were 21 ppm by mass and 58 ppm by mass with respect to the produced polyester resin, respectively.

Thereafter, the temperature of the system was raised to 280°C in 1 hour, the pressure of the system was gradually reduced to 0.15 kPa during this period, and a polycondensation reaction was carried out under these conditions to obtain a polyester resin having an IV of 0.60 dl/g. The obtained polyester resin was then solid-phase polymerized at 230°C for 7 hours under reduced pressure using a batch-type solid-phase polymerization apparatus to obtain a polyester resin (B-1) with an intrinsic viscosity of 0.70 dl/g. The remaining content of aluminum element in polyester resin (B-1) was 21 ppm by mass, the remaining amount of phosphorus element was 45 ppm by mass, and the molar ratio of remaining phosphorus element to aluminum element was 1.87. The content of aluminum element corresponding to aluminum foreign matter in polyester resin (B-1) was 710 ppm by mass, and the L value of polyester resin (B-1) was 58.7. It was confirmed that the polyester resin (B-1) had hindered phenol structure.

<Polyester Resin (A-1)>

As polyester resin (A-1), polyester resin flakes which were made from recycled polyester and provided by Kyoei Sangyo Co.,Ltd. were used. The composition of the polyester resin flakes made from recycled polyester was analyzed, and the result showed that the polyester resin flakes comprised an ethylene terephthalate constituent unit in an amount of 97 mol% or more. The polyester resin flakes made from the recycled polyester had an intrinsic viscosity of 0.750 dl/g. The content of antimony element was 190 ppm by mass and the content of germanium element was 1.6 ppm by mass in the polyester resin flakes made from the recycled polyester. The content of titanium element was very low with an amount of 1 ppm by mass or less, and the content of titanium element was omitted in Tables 2 and 3. From the contents of antimony element, germanium element, and titanium element, it was demonstrated that the polyester resin flakes were recycled mainly from hollow molded bodies of polyester resins produced with an antimony catalyst.

(Examples 1 to 6)

The polyester resin compositions were produced by melt-kneading the polyester resin (A-1) and the polyester resin (B-1) in blend ratios shown in Table 2. Characteristics of the polyester resin compositions are shown in Table 2.

[Table 2]

| | Catalyst (ppm) | Example 1 | Example 2 | Example 3 | Example 4 | Example 5 | Example 6 |
|---|---|---|---|---|---|---|---|
| (A-1) Flakes of collected polyester resin | Sb: 190 ppm, Ge: 1.6 ppm | 50 | 30 | 10 | 70 | 90 | 95 |
| (B-1) | Al: 21 ppm, P: 45 ppm | 50 | 70 | 90 | 30 | 10 | 5 |
| Residue of hindered phenol structure | | Presence | Presence | Presence | Presence | Presence | Presence |
| Initial IV value (dl/g) | | 0.73 | 0.72 | 0.71 | 0.74 | 0.75 | 0.75 |
| Intrinsic viscosity retention rate (%) | After one-time of re-kneading | 94 | 94 | 95 | 92 | 90 | 90 |
| | After three-time of re-kneading | 86 | 85 | 87 | 80 | 78 | 78 |
| CT content (ppm) | After one-time of re-kneading (h) | 5967 | 5667 | 5325 | 6350 | 6592 | 6378 |
| | After three-time of re-kneading (i) | 6480 | 6266 | 5813 | 6980 | 7325 | 7238 |
| ΔCT ((i)-(h)) (ppm) | | 513 | 599 | 488 | 630 | 733 | 860 |

(continued)

| | Catalyst (ppm) | Example 1 | Example 2 | Example 3 | Example 4 | Example 5 | Example 6 |
|---|---|---|---|---|---|---|---|
| L-value | After one-time of re-kneading (j) | 55.4 | 55.6 | 57.1 | 52.5 | 51.0 | 50.6 |
| | After three-time of re-kneading (k) | 49.8 | 51.6 | 53.3 | 48.1 | 46.4 | 46.4 |
| ΔL ((j)-(k)) | | 5.6 | 4.0 | 3.8 | 4.4 | 4.6 | 4.2 |
| b-value | After one-time of re-kneading (l) | 3.6 | 3.0 | 2.2 | 4.0 | 4.5 | 4.8 |
| | After three-time of re-kneading (m) | 5.2 | 4.8 | 4.0 | 6.3 | 7.1 | 7.3 |
| Δb ((m)-(l)) | | 1.6 | 1.8 | 1.8 | 2.3 | 2.6 | 2.5 |

(Comparative Example 1, and Reference Examples 1 to 4)

Characteristics of each of the polyester resin (A-1), the polyester resin (B-1), and the following polyester resins (E) to (G) are shown in Table 3. The polyester resins (E) to (G) were polyester resins produced with at least one of the antimony catalyst, the titanium catalyst, and the germanium catalyst. The contents of each of the antimony element, the titanium element, and the germanium element were measured by the method described above.

Polyester resin (E): N1 manufactured by Indorama Ventures Public Company Limited. (Antimony element content: 270 ppm by mass, intrinsic viscosity: 0.789 dl/g)
Polyester resin (F): H0AF manufactured by Indorama Ventures Public Company Limited. (Titanium element content: 7 ppm by mass, intrinsic viscosity: 0.753 dl/g)
Polyester resin (G): N2G manufactured by Indorama Ventures Public Company Limited. (Germanium element content: 30 ppm by mass, intrinsic viscosity: 0.739 dl/g)

(Comparative Examples 2 to 4)

The polyester resin compositions were produced by melt-kneading the polyester resin (A-1) and any one of polyester resins (E) to (G) in blend ratios shown in Table 3. The characteristics of the polyester resin compositions are shown in Table 3.

[Table 3]

| | Catalyst (ppm) | Comparative Example 1 | Comparative Example 2 | Comparative Example 3 | Comparative Example 4 | Reference Example 1 | Reference Example 2 | Reference Example 3 | Reference Example 4 |
|---|---|---|---|---|---|---|---|---|---|
| (A-1) Flakes of collected polyester resin | Sb: 190 ppm, Ge: 1.6 ppm | 100 | 50 | 50 | 50 | | | | |
| (B-1) | Al: 21 ppm, P: 45 ppm | | | | | 100 | | | |
| (E) N1 | Sb: 270 ppm | | 50 | | | | 100 | | |
| (F) H0AF | Ti: 7 ppm | | | 50 | | | | 100 | |
| (G) N2G | Ge: 30 ppm | | | | 50 | | | | 100 |
| Residue of hindered phenol structure | | Absence | Absence | Absence | Absence | Presence | Absence | Absence | Absence |
| Initial IV value (dllg) | | 0.75 | 0.77 | 0.75 | 0.74 | 0.70 | 0.79 | 0.75 | 0.74 |
| intrinsic viscosity retention rate (%) | After one-time of re-kneading | 88 | 86 | 87 | 87 | 98 | 90 | 93 | 94 |
| | After three-time of re-kneading | 77 | 78 | 76 | 76 | 88 | 75 | 78 | 78 |
| CT content (ppm) | After one-time of re-kneading (h) | 6863 | 6053 | 6192 | 6132 | 5154 | 5938 | 5520 | 5400 |
| | After three-time of re-kneading (i) | 7851 | 7261 | 7086 | 7045 | 5586 | 7421 | 6321 | 6238 |
| ACT ((i)-(h)) (ppm) | | 988 | 1208 | 895 | 913 | 432 | 1483 | 801 | 838 |

(continued)

| | Catalyst (ppm) | Comparative Example 1 | Comparative Example 2 | Comparative Example 3 | Comparative Example 4 | Reference Example 1 | Reference Example 2 | Reference Example 3 | Reference Example 4 |
|---|---|---|---|---|---|---|---|---|---|
| L-value | After one-time of re-kneading (j) | 49.6 | 51.3 | 50.3 | 53.4 | 57.8 | 51.5 | 50.9 | 57.1 |
| | After three-time of re-kneading (k) | 43.6 | 46.2 | 46.8 | 49.9 | 55.3 | 46.8 | 47.9 | 54.1 |
| ΔL ((j)-(k)) | | 6.0 | 5.1 | 3.5 | 3.5 | 2.5 | 4.7 | 3.0 | 3.0 |
| b-value | After one-time of re-kneading (l) | 5.8 | 4.3 | 3.4 | 4.3 | 1.9 | 2.0 | 1.2 | 2.7 |
| | After three-time of re-kneading (m) | 7.9 | 6.4 | 6.1 | 6.4 | 3.8 | 5.2 | 4.6 | 4.8 |
| Δb ((m)-(l)) | | 2.1 | 2.1 | 2.8 | 2.1 | 1.9 | 3.2 | 3.4 | 2.1 |

In Examples 1 through 6, polyester resin compositions with high intrinsic viscosity retention rate could be obtained even after multiple recycling by mixing the polyester resin (B-1) with the collected polyester resin (A-1).

In addition, in Examples 1 through 6, by mixing the polyester resin (B-1) with the collected polyester resin (A-1), polyester resin compositions that the L value as a scale of darkening remained high and the b value as a scale of yellowing remained low even after multiple recycling could be obtained even after multiple recycling.

The polyester resin (B-1) is of high quality because the polymerization time is shortened and the amount of aluminum foreign matter is low, despite the small amount of aluminum and phosphorus elements added. In addition, the cost of catalyst can be reduced because the content of catalyst added is also small.

Reference Example 1 using the polyester resin (B-1) has excellent recyclability and the polyester resin (B-1) is less economical due to its high production cost.

In Comparative Example 1, the collected polyester resin (A-1) was recycled, and as the number of recycling cycles increased, the molecular weight decreased as the intrinsic viscosity retention rate decreased. Further, the L value decreased, the b value increased, and coloration was observed.

In Reference Examples 2 to 4, polyester resins containing antimony element, titanium element, or germanium element were used, and in Comparative Examples 2 to 4, the polyester resin (A-1) collected for recycling was mixed with a polyester containing antimony element, titanium element, or germanium element. Although the intrinsic viscosity retention rates of the polyester resins containing the antimony element, the titanium element, or the germanium element (Reference Examples 2 to 4) were high, mixtures of the polyester resin (A-1) collected for recycling and a polyester resin containing the antimony element, the titanium element, or the germanium element (Comparative Examples 2 to 4) had equivalent intrinsic viscosity retention rates to the polyester resin obtained by recycling only the polyester resin (A-1) collected for recycling; accordingly, mixing of the polyester resin containing the antimony element, the titanium element, or the germanium element with the polyester resin (A-1) collected for recycling could not prevented a decrease in molecular weight. In addition, mixing of the polyester resin containing the antimony element, the titanium element, or the germanium element with the polyester resin (A-1) collected for recycling caused increases in CT amount and ΔCT with an increase in the number of recycling, and recyclability was not increased.

## INDUSTRIAL APPLICABILITY

The production of the polyester resin composition (C) by mixing the polyester resin (B) comprising a certain amount of the aluminum compound and the phosphorus compound and the polyester resin (A) collected for recycling can prevent coloring and a decrease in molecular weight of the polyester resin composition (C), leading to low-cost production of polyester resin composition having high recyclability. In addition, the production of hollow molded body (D) from the polyester resin composition obtained by mixing the polyester resin (B) comprising the aluminum compound and the phosphorus compound and the polyester resin (A) collected for recycling can prevent coloring and a decrease in molecular weight of the hollow molded body (D), leading to production of polyester resin compositions having high recyclability.

The polyester resin composition (C) and the hollow molded body (D) can be recycled, thereby contributing to solving various problems, such as resource depletion, increase in marine debris, and global warming.

## Claims

**1.** A method for producing a polyester resin composition (C), the method comprising a step of

mixing a polyester resin (A) collected for recycling and a polyester resin (B) comprising an aluminum compound and a phosphorus compound,
wherein the polyester resin (A) satisfies the following (1) to (3):

(1) the polyester resin (A) comprises at least one element selected from antimony element, titanium element, and germanium element,
(2) the polyester resin (A) comprises at least one element of the antimony element, the titanium element, and the germanium element at a total content of 2 to 500 ppm by mass, and
(3) the polyester resin (A) has an intrinsic viscosity of 0.5 to 0.8 dl/g.

**2.** The method according to claim 1, wherein the polyester resin (B) satisfies the following (4) and (5):

(4) the polyester resin (B) comprises aluminum element at a content of 5 to 50 ppm by mass, and
(5) the polyester resin (B) comprises phosphorus element at a content of 5 to 1000 ppm by mass.

3. The method according to claim 1 or 2, wherein the polyester resin composition (C) has an intrinsic viscosity retention rate of 89 % or more.

4. The method according to any one of claims 1 to 3, wherein the polyester resin (A) has an intrinsic viscosity retention rate of 92 % or less.

5. The method according to any one of claims 1 to 4, wherein the polyester resin (B) has an intrinsic viscosity retention rate of 93 % or more.

6. The method according to any one of claims 1 to 5, wherein an amount of the polyester resin (A) with respect to 100 parts by mass of a total amount of the polyester resin (A) and the polyester resin (B) is from 5 to 95 parts by mass.

7. The method according to any one of claims 1 to 6, wherein the phosphorus compound has the phosphorus element and phenolic structure in the same molecule.

8. A method for producing a hollow molded body (D), the method comprising a step of
melt-molding the polyester resin composition (C) prepared with the method according to any one of claims 1 to 7.

9. A method for regenerating a polyester resin (A) collected for recycling comprising a step of
mixing the polyester resin (A) and a polyester resin (B) comprising an aluminum compound and a phosphorus compound, wherein the polyester resin (A) satisfies the following (1) to (3):

(1) the polyester resin (A) comprises at least one element selected from antimony element, titanium element, and germanium element,
(2) the polyester resin (A) comprises at least one element of the antimony element, the titanium element, and the germanium element at a total content of 2 to 500 ppm by mass, and
(3) the polyester resin (A) has an intrinsic viscosity of 0.5 to 0.8 dl/g.

10. The method according to claim 9, wherein the polyester resin (B) satisfies the following (4) and (5):

(4) the polyester resin (B) comprises aluminum element at a content of 5 to 50 ppm by mass, and
(5) the polyester resin (B) comprises phosphorus element at a content of 5 to 1000 ppm by mass.

11. The method according to claim 9 or 10, wherein an amount of the polyester resin (A) with respect to 100 parts by mass of a total amount of the polyester resin (A) and the polyester resin (B) is from 5 to 95 parts by mass.

12. The method according to any one of claims 9 to 11, wherein the phosphorus compound has the phosphorus element and phenolic structure in the same molecule.

13. A polyester resin composition (C) comprising a polyester resin (A) collected for recycling and a polyester resin (B) comprising an aluminum compound and a phosphorus compound, wherein the polyester resin (A) satisfies the following (1) to (3):

(1) the polyester resin (A) comprises at least one element selected from antimony element, titanium element, and germanium element,
(2) the polyester resin (A) comprises at least one element of the antimony element, the titanium element, and the germanium element at a total content of 2 to 500 ppm by mass, and
(3) the polyester resin (A) has an intrinsic viscosity of 0.5 to 0.8 dl/g.

14. The polyester resin composition (C) according to claim 13, wherein the phosphorus compound has the phosphorus element and phenolic structure in the same molecule.

15. The polyester resin composition (C) according to claim 13 or 14, wherein the polyester resin composition (C) has an intrinsic viscosity retention rate of 89 % or more.

16. A hollow molded body (D) formed from the polyester resin composition (C) according to any one of claims 13 to 15.

**INTERNATIONAL SEARCH REPORT**

International application No.
**PCT/JP2022/015371**

**A. CLASSIFICATION OF SUBJECT MATTER**

***C08L 67/02***(2006.01)i
FI: C08L67/02

According to International Patent Classification (IPC) or to both national classification and IPC

**B. FIELDS SEARCHED**

Minimum documentation searched (classification system followed by classification symbols)

C08L67/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2012/029725 A1 (TOYOBO CO LTD) 08 March 2012 (2012-03-08) polyester pellets A, B, H, example 6, paragraph [0125] | 1-16 |
| X | JP 2015-28962 A (MITSUBISHI PLASTICS INC) 12 February 2015 (2015-02-12) claims, example 5, paragraph [0014] | 1-7, 9-15 |
| Y | | 1-16 |
| X | JP 2014-239128 A (MITSUBISHI PLASTICS INC) 18 December 2014 (2014-12-18) claims, example 5, paragraph [0013] | 1-7, 9-15 |
| Y | | 1-16 |
| X | JP 2014-170914 A (MITSUBISHI PLASTICS INC) 18 September 2014 (2014-09-18) claims, examples 5, 26, paragraph [0013] | 1-7, 9-15 |
| Y | | 1-16 |
| X | JP 2006-96789 A (TOYO BOSEKI) 13 April 2006 (2006-04-13) claims, examples, paragraphs [0198], [0004]-[0007] | 1-16 |
| Y | | 1-16 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 May 2022** | **31 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/015371**

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2007-56101 A (TOYO BOSEKI) 08 March 2007 (2007-03-08)<br>claims, examples, paragraphs [0271], [0002]-[0006] | 1-16<br>1-16 |
| X | JP 2007-182477 A (TOYO BOSEKI) 19 July 2007 (2007-07-19)<br>claims, examples 1, 2 | 13-16 |
| A | JP 2003-261666 A (TOYO BOSEKI) 19 September 2003 (2003-09-19)<br>claims, examples | 1-16 |
| A | JP 2003-268095 A (TOYO BOSEKI) 25 September 2003 (2003-09-25)<br>claims, examples | 1-16 |

Form PCT/ISA/210 (second sheet) (January 2015)

**INTERNATIONAL SEARCH REPORT**
**Information on patent family members**

International application No.
**PCT/JP2022/015371**

| Patent document cited in search report | Publication date (day/month/year) | Patent family member(s) | Publication date (day/month/year) |
|---|---|---|---|
| WO 2012/029725 A1 | 08 March 2012 | JP 2012-122051 A<br>polyester pellets A, B, H,<br>example 6, paragraph [0133] | |
| JP 2015-28962 A | 12 February 2015 | (Family: none) | |
| JP 2014-239128 A | 18 December 2014 | (Family: none) | |
| JP 2014-170914 A | 18 September 2014 | WO 2014/038305 A1<br>claims, examples 5, 26 | |
| JP 2006-96789 A | 13 April 2006 | (Family: none) | |
| JP 2007-56101 A | 08 March 2007 | (Family: none) | |
| JP 2007-182477 A | 19 July 2007 | (Family: none) | |
| JP 2003-261666 A | 19 September 2003 | (Family: none) | |
| JP 2003-268095 A | 25 September 2003 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013154042 A
- WO 2013154043 A
- WO 2007032325 A
- JP 2006169432 A
- JP 2021078749 A